# EUROPEAN PATENT APPLICATION

(11) **EP 4 554 321 A1**
(43) Date of publication of application: **14.05.2025**
(21) Application number: 24207975.4
(22) Date of filing: 22.10.2024
(51) Int. Cl.: H04W 84/12, H04W 48/16, H04W 48/20, H04W 48/14

(54) **ACTIVE SCANS WITH SIMULTANEOUS TRANSMISSIONS**

(30) Priority: 13.11.2023 US 202318507670
(71) Applicant: Avago Technologies International Sales Pte. Limited, Singapore 768923 (SG)
(72) Inventor: Dutta, Mahesh H. K., Irvine, 92618 (US); Raveendranath Kamath, Manoj, Irvine, 92618 (US); Hegde, Gireesh, Irvine, 92618 (US)
(74) Representative: Dilg, Haeusler, Schindelmann Patentanwaltsgesellschaft mbH

(57) **Abstract**

A circuitry (110) can transmit a first probe request to discover a first access point (130) of a first channel. The circuitry (110) can also transmit one or more additional probe requests to discover one or more other access points (130) of one or more other channels. The circuitry (110) can also, responsive to transmission of the one or more additional probe requests, check for the response to the first probe request on the first channel. The circuitry (110) can also receive the response to the first probe request. The response can identify the first access point (130).

## Description

### BACKGROUND

The present disclosure is related to access point discovery for one or more networks.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a block diagram of a system for active scans using simultaneous transmissions, according to some embodiments.
FIG. 2 is a block diagram of an architecture for active scans of one or more channels, according to some embodiments.
FIG. 3 is a block diagram of an architecture for active scans having simultaneous transmissions on the one or more channels illustrated in FIG. 2, according to some embodiments.
FIG. 4 is a flow diagram of a time chart illustrating probe requests and probe responses for the one or more channels illustrated in FIG. 3, according to some embodiments.
FIG. 5 is a flow diagram of a process for performing active scans of the one or more channels illustrated in FIG. 3, according to some embodiments.

### DETAILED DESCRIPTION

Some embodiments are related to systems and methods for performing active scans to discover access points for one or more channels. An active scan may refer to transmitting a first probe request, on a first channel, to discover a first access point of the first channel while subsequently transmitting a second probe request, on a second channel, to discover a second access point of the second channel. A probe request may include transmitting a signal, at and/or across one or more frequencies, to request information relating to a network of a given network. For example, a probe request may refer to and/or include a Management frame. The probe request can involve asking for information regarding a network. For example, the probe request can include asking for a Service Set Identification (SSID). The network may be located, and/or implemented within a given channel. For example, the network may be located on a first channel of a 5G band. To continue this example, to discover an access point of the network, a first probe request may be transmitted on the first channel. An access point may refer to and/or include network devices and/or network equipment that may connect devices with a network. For example, an access point may include and/or interact with a router.

Bands may include one or more channels which may result in a single band having multiple networks across the one or more channels. For example, a first band may include a first channel and a second channel. To continue this example, the first channel may include a first network and the second channel may include a second network. To discover access points for a network in a given channel, a probe request is transmitted on the given channel. For example, a channel may include and/or correspond to a given frequency and the probe request may be transmitted on the given frequency. Probe requests may be transmitted on subsequent channels to discover and/or identify access points of the subsequent channels.

Other systems may utilize and/or employe active scans to discover access points by transmitting a probe request and then pausing and/or waiting for a response. An active scan may include transmitting a probe request on a first channel and waiting for a response to the probe request for a given amount of time. While the other systems wait for responses, time continues to be consumed without any additional actions. The other systems waiting for responses increases a total amount of time taken and/or consumed to complete active scans for multiple channels.

Some technical solutions and advantages of some embodiments are related to a system including circuitry to transmit a first probe request and subsequently transmit one or more second probe requests while also listening for a response to the first probe request. The transmission of multiple probe requests while also listening for a response to a given probe request may include performing active scans across a band. For example, instead of sending a first probe request and waiting for the response prior to sending a second probe request, the circuity may transmit one or more probe requests via a first antenna while also waiting for responses to the probe requests via a second antenna. The circuity may utilize active scans to exploit a response time included within a dwell time of a given probe request. For example, instead of sending a first probe request and then waiting to receive a response to the first probe request, the circuity may transmit one or more second probe requests on one or more subsequent channels. As another example, the circuity may transmit a first probe request on a first channel and the circuity may transmit a second probe request on a second channel.

A system may refer to and/or include at least one of a computer network, a network topology, a Wide-Area Network (WAN), a Local Area Network (LAN), a Virtual Local Area Network (VLAN), a datacenter, an isolated network, data communications, a data network, telecommunication networks, circuits, circuitry, processing circuits, and/or other possible computer systems, in some embodiments. In some embodiments, the system may refer to and/or include a network. A device may refer to and/or include at least one of an integrated circuit, a general purpose processor, a multicore processor, a software programmable device, a computer application, a programmable logic controller, and/or other possible circuitry and/or hardware, in some embodiments. Similarly, the functionality of the device may be stored, in memory, as software, firmware, and/or as instructions and when the information (e.g., software, firmware, and/or instructions) stored in memory are executed, by a processor, results in the processor performing the functionality of the device (e.g., the processor can detect pieces of equipment and establish a topology across a network).

A circuitry may refer to and/or include at least one processing circuits, circuits, communication devices, signal processors, comparators, System on Chip (SoC), filters, digital signal processors, logic gates, latches, state storage devices, integrated circuits, software programable devices, programable logic controllers, and/or among other possible circuitry and/or hardware, in some embodiments. A network may refer to and/or include at least one of a WAN, a LAN, a VLAN, a Wireless Local Area Network (WLAN), wireless communication, wired communication, and/or other possible network infrastructures and/or configurations.

An access point may refer to and/or include at least one of network devices, routers, switches, hubs, bridges, modems, gateways, ethernet ports, ethernet jacks, network interfaces, wired jacks, network ports, and/or other possible network devices, in some embodiments.

Pieces of equipment may refer to and/or include at least one of computers, computing devices, mobile devices, desktops, laptops, servers, controllers, Internet Of Things (IOT) devices, video devices, monitors, displays, tablets, printers, scanners, fax machines, gateways, ethernet jacks, bridges, and/or other possible computing devices, in some embodiments. A channel may refer to and/or include at least one of a collection of one or more frequencies, a subset of a band, a section of a band, a Radio Frequency (RF) spectrum, and/or other possible portions of a band, in some embodiments. A band may refer to and/or include at least one of a range of frequencies, a RF spectrum, a frequency range, and/or other possible spectrums, in some embodiments.

Discovery of an access point may refer to and/or include at least one of a local device identification, a local port, a remote device identification, a remote port, an IP address, a chassis identification, a SSID, a hello packet, device capabilities, Medium Access Control (MAC) address, VLAN name, device description, and/or other possible equipment identification, in some embodiments.

A connection may refer to and/or include at least one of a wired connection between a device and a network, a wireless connection between a device and a network, an electric coupling of devices with one another, establishing communication between a first device and a second device of a network, executing one or more routines for a communication protocol, executing one or more routines for a communication standard, and/or various ways to connect a device with a network, in some embodiments.

Some embodiments relate to a system. The system can include a circuitry. The circuitry can transmit a first probe request to discover a first access point of a first channel. The circuitry can also transmit one or more additional probe requests to discover one or more other access points of one or more other channels, instead of waiting for a response to the first probe request. The circuitry can also, responsive to transmission of the one or more additional probe requests, check for the response to the first probe request on the first channel. The circuitry can also receive the response to the first probe request, wherein the response identifies the first access point.

In some embodiments, the one or more other channels can be selected based at least on a difference between one or more first frequencies of the first channel and one or more second frequencies of the one or more other channels.

In some embodiments, the one or more other channels can include a second channel and a third channel. The difference between one or more first frequencies of the first channel and one or more second frequencies of the third channel can be different than the difference between the one or more first frequencies of the first channel and one or more second frequencies of the second channel.

In some embodiments, the circuitry can also establish a connection via a network with the first access point of the first channel.

In some embodiments, the circuit can also, responsive to receipt of the response to the first probe request, check for one or more responses to the one or more additional probe requests on the one or more other channels. The circuitry can also receive the one or more responses to the one or more additional probe requests, wherein the one or more responses identify one or more second access points.

In some embodiments, the one or more additional probe requests can include a second probe request and a third probe request. One or more other access points can include a second access point and a third access point. The circuitry can also transmit the second probe request and the third probe request subsequent to the first probe request and prior to a time period that the circuity is configured to check for the response to the first probe request.

In some embodiments, the circuitry can also determine, responsive to connection to a network, a first location of a device comprising the circuitry. The circuitry can also transmit, responsive to determination that the device has moved from the first location to a second location, one or more third signals to discover one or more third access points.

In some embodiments, the first channel and the one or more other channels can correspond to a first band of frequencies. The circuitry can also transmit one or more third probe requests across a second band of frequencies different than the first band of frequencies to discover one or more third access points on the second band.

In some embodiments, the first band can include a first plurality of frequencies, and the second band can include a second plurality of frequencies different from the first plurality of frequencies.

Some embodiments relate to a device. The device can include one or more processors. The one or more processors can transmit a first probe request to discover a first access point of a first channel. The one or more processors can also transmit one or more second probe requests to discover one or more second access points of one or more second channels, instead of waiting for a response to the first probe request. The one or more processors can also, responsive to transmission of the one or more second probe requests, check for the response to the first probe request on the first channel. The one or more processors can also receive the response to the first probe request, wherein the response identifies the first access point.

In some embodiments, the one or more second channels can be selected based at least on a difference between one or more first frequencies of the first channel and one or more second frequencies of the one or more second channels.

In some embodiments, the one or more second channels can include a second channel and a third channel. The difference between the one or more first frequencies of the first channel and the one or more second frequencies of the third channel can be different than the difference between the one or more first frequencies of the first channel and the one or more second frequencies of the second channel.

In some embodiments, the one or more processors can also transmit the one or more second probe requests prior to checking for the response on the first channel.

In some embodiments, the one or more processors can, responsive to receipt of the response to the first probe request, check for one or more second responses to the one or more second probe requests on the one or more second channels. The one or more processors can also receive the one or more second responses to the one or more second probe requests, wherein the one or more second responses identify one or more second access points.

In some embodiments, the one or more second probe requests can include a second probe request and a third probe request. The one or more second access points can include a second access point and a third access point. The one or more processors can also transmit the second probe request and third probe request subsequent to the first probe request and prior to a time period where the one or more processors are configured to check for the response to the first probe request.

In some embodiments, the one or more processors can also establish, responsive to receipt of the response, a connection with the first access point to connect the device to a network associated with the first access point. The one or more processors can also determine, responsive to connection to the network, a first location of the device. The one or more processors can also transmit, responsive to determination that the device has moved from the first location to a second location, one or more third signals to discover one or more third access points.

In some embodiments, the first channel and the one or more second channels can correspond to a first band of frequencies. The one or more processors can also transmit one or more third probe requests across a second band of frequencies different than the first band to discover one or more third access points on the second band.

Some embodiments relate to a method. The method can include transmitting, by a circuitry, a first probe request to discover a first access point of a first channel. The method can also include transmitting, by the circuitry, one or more second probe requests to discover one or more second access points of one or more second channels, instead of waiting for a response to the first probe request. The method can also include, responsive to transmission of the one or more second probe requests, waiting, by the circuitry, for the response to the first probe request on the first channel. The method can also include receiving, by the circuitry, the response to the first probe request, wherein the response identifies the first access point.

In some embodiments, the one or more second channels can be selected based at least on a difference between one or more first frequencies of the first channel and one or more second frequencies of the one or more second channels.

In some embodiments, the method can also include, responsive to receipt of the response to the first probe request, checking, by the circuitry, for one or more second responses to the one or more second probe requests on the one or more second channels. The method can also include receiving, by the circuitry, the one or more second responses to the one or more second probe requests, wherein the one or more second responses identify one or more second access points.

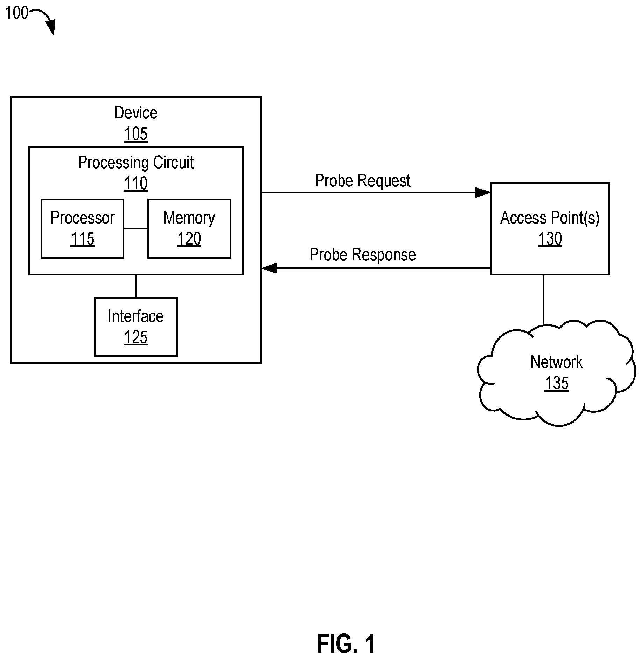

FIG. 1 depicts a block diagram of a system 100, according to some embodiments. Each system, device, and/or component of the system 100 may include one or more processors, memory, network interfaces, communication interfaces, and/or user interfaces. In some embodiments, the memory may store programming logic that, when executed by the processors, controls the operation of the corresponding system, device, and/or component. Memory can also store data in databases. The network interfaces may allow the systems and/or components of the system 100 to communicate wirelessly. The communication interfaces may include wired and/or wireless communication interfaces and the systems and/or components of the system 100 may be connected via the communication interfaces. The various components in the system 100 may be implemented via hardware (e.g., circuitry), software (e.g., executable code), or any combination thereof. Systems, devices, and components, as shown in FIG. 1, may be added, removed, modified, separated, combined, rearranged, deleted, integrated, and/or adjusted. For example, a first device that is shown to include a first component and a second component may be modified so that the first component and the second component are provided as a single component. As another example, a device that is shown to be included within a first system may also be added to a second system.

In some embodiments, the system 100 may include at least one device 105, at least access point 130, and at least one network 135. In some embodiments, the network 135 may refer to and/or include wired and/or wireless telecommunications. The network 135 may include at least one of the various networks described herein. For example, the network 135 may include Wide-Area Networks (WANs). As another example, the network 135 may include Local Area Networks (LANs). In some embodiments, the system 100 may include multiple networks 135 and a given network 135 of the multiple networks 135 may be located on and/or refer to a given channel of a given band. In some embodiments, the access points 130 may include at least one of the various network devices described herein. For example, the access points 130 may include at least one of routers, switches, bridges, hubs, and/or gateways. In some embodiments, the access points 130 may connect and/or provide access to the networks 135.

In some embodiments, the device 105 may include at least one processing circuit 110 and at least one interface 125. The processing circuit 110 may refer to and/or include at least one of the circuits, circuity, and/or processing circuits described herein. In some embodiments, the processing circuits 110 may include at least one processor 115 and memory 120. Memory 120 may refer to and/or include one or more devices (e.g., Random Access Memory (RAM), Read Only Memory (ROM), Flash memory, hard disk storage) for storing data and/or computer code for completing and/or facilitating the various processes described herein. Memory 120 may be and/or include non-transient volatile memory, non-volatile memory, and non-transitory computer storage media. Memory 120 may include database components, object code components, script components, or any other type of information structure for supporting the various activities and information structures described herein. Memory 120 may be communicably coupled to the processors 115 and memory 120 may include computer code or instructions (e.g., firmware or software) for executing one or more processes described herein.

The processors 115 may be implemented as one or more application specific integrated circuits (ASICs), field programmable gate arrays (FPGAs), a group of processing components, or other suitable electronic processing components. Memory 120 may store one or more instructions that, when executed by the processors 115, cause the processors 115 to perform one or more of the various operations described herein. In some embodiments, memory 120 may store, keep, and/or maintain at least one of records, tables, databases, data structures, and/or collections of information.

In some embodiments, the interface 125 may include at least one of network communication devices, network interfaces, and/or other possible communication interfaces. The interface 125 may include wired or wireless communications interfaces (e.g., jacks, antennas, transmitters, receivers, transceivers, wire terminals, etc.) for conducting data communications with various systems, devices, and/or components described herein. The interface 125 may include direct (e.g., local wired or wireless communications) and/or via a communications network (e.g., the network 135). For example, the interface 125 may include an Ethernet card and port for sending and receiving data via an Ethernet-based communications link or network. The interface 125 may include a Wi-Fi transceiver for communicating via a wireless communications network (e.g., the network 135). The interface 125 may include a power line communications interface. The interface 125 may include an Ethernet interface, a Universal Serial Bus (USB) interface, a serial communications interface, and/or a parallel communications interface. In some embodiments, the interface 125 may connect and/or integrate the device 105 with the network 135.

In some embodiments, the processing circuit 110 may transmit one or more signals. For example, the processing circuit 110 may transmit a first signal and a second signal. In some embodiments, the processing circuit 110 may transmit one or more probe requests. For example, the processing circuit 110 may transmit a first probe request to discover a first access point 130. In some embodiments, the processing circuit 110 may transmit the probe requests based on one or more communication protocols. For example, the processing circuit 110 may transmit a probe request based on a Wireless Local Area Network (WLAN) protocol.

In some embodiments, the interface 125 may include one or more transmitters, receivers, antennas, transceivers, radio devices, and/or other communication devices. For example, the interface 125 may include a transmitter and a receiver. To continue this example, the transmitter may transmit one or more signals and the receiver may listen and/or check for one or more responses to the signals transmitted by the transmitter. In some embodiments, the processing circuit 110 may transmit one or more probe requests with the interface 125. For example, the interface 125 may include a transmitter and the processing circuit 110 may transmit the probe requests via the transmitter.

In some embodiments, the processing circuit 110 may transmit one or more simultaneous and/or subsequent probe requests. For example, the processing circuit 110 may transmit a first probe request and the processing circuit 110 may transmit a second probe request. In some embodiments, the probe requests (e.g., the first probe request and the second probe request) may be transmitted simultaneous (e.g., transmitted at the same time). In some embodiments, the probe requests (e.g., the first probe request and the second probe request) may be transmitted subsequently. For example, the processing circuit 110 may transmit a first probe request at a first point and the processing circuit 110 may transmit a second probe request at a second point in time.

In some embodiments, the processing circuit 110 may transmit probe requests on one or more channels. For example, the processing circuit 110 may transmit a first probe request on a first channel and the processing circuit 110 may transmit a second probe request on a second channel. In some embodiments, the processing circuit 110 may trigger, responsive to transmission of a probe request, one or more probe responses. For example, the processing circuit 110 may transmit a first probe request on a first channel that triggers a response from a given access point 130 on the first channel to the first probe request.

In some embodiments, the processing circuit 110 may transmit probe requests prior to receipt of a response. For example, the processing circuit 110 may transmit a first probe request and a second probe request prior to the processing circuit 110 receiving and/or checking for a response to at least one of the probe requests. Stated otherwise the processing circuit 110 may transmit one or more probe requests while pausing and/or withholding from checking for a response to a given probe request. In some embodiments, the processing circuit 110 may transmit one or more probe requests during a time period which the processing circuit 110 would otherwise being waiting and/or listening for a response to a given probe request. For example, the processing circuit 110 may transmit at a first point in time a first probe request and the processing circuit 110 may receive a response to the first probe request at a second point in time. To continue this example, the processing circuit may transmit, prior to the second point in time, one or more second probe requests such that the second probe requests are transmitted prior to receipt of the response.

In some embodiments, the processing circuit 110 may receive one or more responses. For example, the processing circuit 110 may receive responses from the access points 130. In some embodiments, the processing circuit 110 may receive the responses subsequent to and/or responsive to the processing circuit 110 transmitting the probe requests. For example, the processing circuit 110 may receive a first response, from a first access point 130, responsive to the processing circuit 110 transmitting a probe request on a channel that includes the first access point 130.

As a non-limiting example, the interface 125 may include a transmitter and a receiver. In this non-limiting example, the processing circuit 110 may transmit a first probe request and a second probe request via the transmitter. To continue this non-limiting example, the processing circuit 110 may listen and/or check for one or more responses to the probe requests. In this non-limiting example, the processing circuit 110 may listening for the responses via the receiver. To continue this non-limiting example, the processing circuit 110 may continuously and/or semi-continuously transmit probe requests via the transmitter while also listening for responses via the receiver. To continue this non-limiting example, the processing circuit 110 may subsequently transmit one or more probe requests, via the transmitter, while also listening, via the receiver, for one or more responses.

As another non-limiting example, the interface 125 may include multiple devices to transmit probe requests and to receive responses. In this non-limiting example, the interface 125 may include a first device and a second device. The first device may include a transmitter and a receiver, and the second device may include a transmitter and a receiver. To continue this non-limiting example, the processing circuit 110 may transmit, via the transmitter of the first device, one or more first probe requests. To continue this non-limiting example, the processing circuit 110 may transmit, via the transmitter of the second device, one or more second probe requests. In this non-limiting example, the processing circuit 110 may listen, via the receiver of the first device, for one or more responses to the first probe requests. The processing circuit 110 may listen, via the receiver of the second device, for one or more response to the second probe requests. In this non-limiting example, the processing circuit 110 may transmit the first probe requests and the second probe requests simultaneously and/or in parallel (e.g., at the same time).

In some embodiments, the responses may identify the access points 130. For example, the response may include information that identifies a given piece of equipment (e.g., a router, a switch, a hub, a bridge, etc.). As another example, the response may identify a given network 135. For example, the response may include a SSID for a given network 135. In some embodiments, the processing circuit 110 may establish one or more connections. For example, the processing circuit 110 may establish a connection with a given network 135. In some embodiments, the processing circuit 110 may establish a connection responsive to receipt of a response that identifies a given access point. For example, the processing circuit 110 may establish a connection by connecting, via the access point 130, the device 105 with the network 135.

In some embodiments, the processing circuit 110 may determine one or more locations. For example, the processing circuit 110 may determine a location of the device 105. In some embodiments, the locations may include at least one of a Global Position System (GPS) location, a geofence location, a spatial position, a geographic location, a location within a building, a triangulation coordinate, a location relative to a benchmark, and/or other possible locations. In some embodiments, the processing circuit 110 may determine and/or detect one or more changes to the locations. For example, the processing circuit 110 may determine that the device 105 has move from a first location to a second location. As another example, the processing circuit 110 may determine that the device 105 has moved from a location within a building to a location external to the building.

In some embodiments, the processing circuit 110 may transmit one or more probe requests based on the change in location. For example, the processing circuit 110 may transmit one or more probe requests to discover one or more access points 130 that may have been unknown and/or hidden when the device 105 was in a given position. In some embodiments, the processing circuit 110 may transmit one or more probe requests to discover access points 130 that become identifiable and/or discoverable responsive to a change in location for the device 105. For example, a device 105 moving from outside a building to inside of the building may result in one or more access points for networks that are located within the building been discoverable.

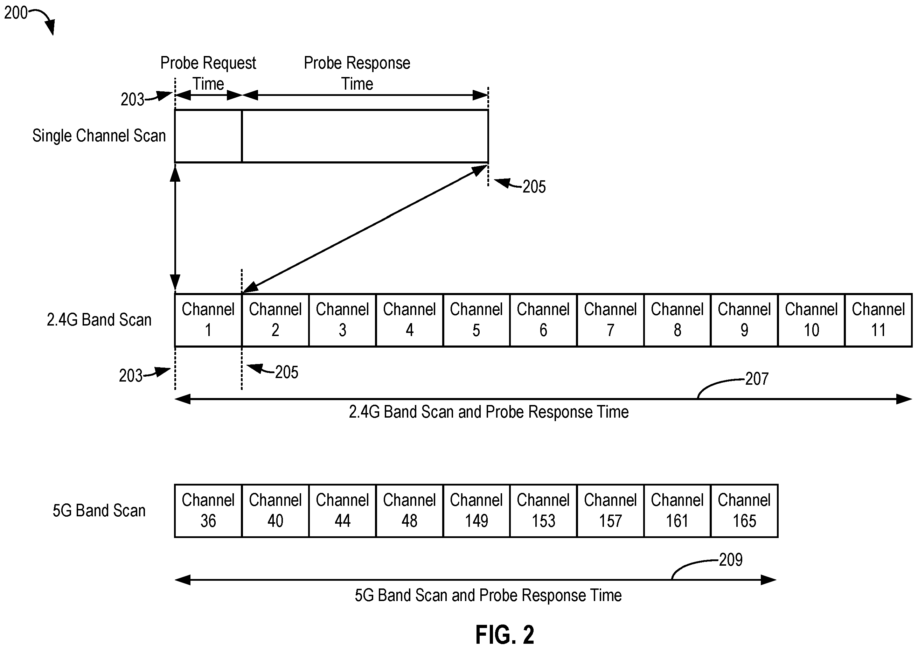

FIG. 2 depicts a block diagram of an architecture 200 for active scans of one or more channels, according to some embodiments. The architecture 200 includes a representation of a dwell time for a given channel. For example, as shown in FIG. 2, a single channel scan is shown to include a probe request time 203 and a probe response time 205. The probe request time 203 and the probe response time 205 may refer to and/or include a dwell time. As shown in FIG. 2, the probe request time 203 and the probe response time 205, for channel 1, is shown to occur prior to transmission of any subsequent probe requests. For example, a probe request is transmitted on channel 1 and the probe request time and the probe response time both elapse prior to a transmission of a probe request on one or more subsequent channels. Stated otherwise, the dwell time for a probe request on channel 1 elapses prior to and/or before any subsequent probe request are transmitted.

FIG. 2 includes a non-limiting example of active scans including probe requests transmitted across a 2.4G band and probe requests transmitted across a 5G band. In this non-limiting example, a dwell time for a single probe request (e.g., a probe request on a single channel) may be 20 milliseconds (e.g., a probe request time and a waiting for a response time add up to 20 milliseconds). To continue this non-limiting example, to complete active scans of the eleven channels shown in the 2.4G band would elapse 20 milliseconds (e.g., 11 channels x 20 milliseconds/channel). Furthermore, in this non-limiting example, to complete active scans of the nine channels shown in the 5G band would elapse 180 milliseconds (e.g., 9 channels x 20 milliseconds/channel). To continue this example, the total amount of time to complete a band scan (e.g., scan or probe each channel) of the 2.4G band and the 5G band would elapse 400 milliseconds.

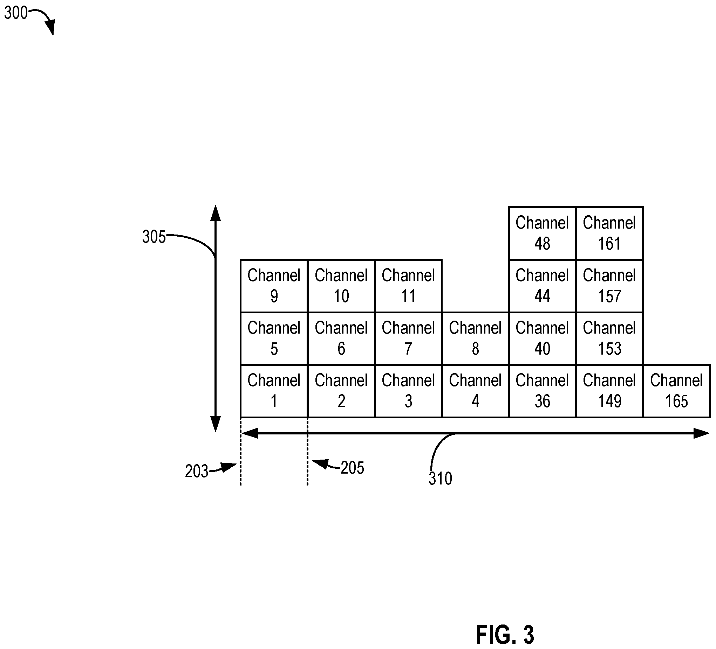

FIG. 3 depicts a block diagram of an architecture 300 for active scans of one or more channels, according to some embodiments. As shown in FIG. 3, one or more channels have been stacked, grouped, and/or paired to implement active scans. For example, channels 1, 5, and 9 are shown to be grouped. To continue this example, the processing circuit 110 may execute an active scan by transmitting a first probe request on channel 1 at a first point in time, by transmitting a second probe request on channel 5 at a second point in time, and by transmitting a third probe request on channel 9 at a third point in time. The first point in time, the second point in time, and/or the third point in time may occur prior to the processing circuit 110 receiving a response to the first probe request. Stated otherwise, the second probe request and/or the third probe request may be transmitted during a dwell time of the first probe request. In some embodiments, reference number 305 may represent a parallel transmission of probe requests for one or more channels of a given set of grouped channels. For example, reference number 305 may represent transmission of a probe request on channel 1, a probe request on channel 5, and a probe request on channel 9. Reference number 305 may also represent receiving and/or listening for responses to the probe requests for channel 1, 5, and/or 9. In some embodiments, reference number 310 may represent an amount of time to transmit one or more grouped probe requests. For example, reference number 310 may represent a collection of time intervals between lines 203 and 205. As another example, the reference number 310 may illustrate and/or represent an amount of time to complete and/or perform active scans for the channels illustrated in FIG. 3. FIG. 3 depicts an example of time savings that results from active scans. As shown in FIG. 3, probe requests are transmitted and responses are received on channel 1, channel 5, and channel 9 within a single time interval between lines 203 and 205. Conversely, in FIG. 2, which discussed active scans including transmitting a single probe request and waiting for a response to the probe request, probe requests and responses for a single channel were received in a time interval between lines 203 and 205, without any subsequent probe requests transmissions within the time interval.

In some embodiments, the channels may be grouped and/or paired with one another based on one or more frequencies of the channels. For example, a first channel and a second channel may be grouped based at least one a difference between frequencies of the first channel with respect to frequencies of the second channel. Stated otherwise, the first channel and the second channel may be grouped together based on a buffer and/or threshold between frequencies of the channels.

As a non-limiting example, channel 1 may refer to and/or include frequencies between 0 Megahertz (MHz) and 5 MHz. To continue this example, each subsequent channel may include a frequency of 5 MHz (e.g., channel 2 includes frequencies between 5 MHz and 10 MHz). In this non-limiting example, the threshold between grouped channels is shown to be 20 MHz. Stated otherwise, a difference between frequencies of channel 1 and channel is 20 MHz. The difference between frequencies of channels may include a difference between a starting frequency of a first channel and a starting frequency of a second channel. The difference between frequencies of channels may also include a difference between a starting frequency of a first channel and an ending frequency of a second channel. To continue this non-limiting example, the difference (e.g., threshold, buffer, boundary, etc.) between grouped channels may eliminate and/or avoid chatter or noise when the processing circuit 110 is scanning and/or searching for responses to probe requests for group channels. In this non-limiting example, the processing circuit 110 may transmit a first probe request on channel 1, transmit a second probe request on channel 5, and transmit a third probe request on channel 9 prior to the processing circuit 110 checking for a response to the first probe request.

In some embodiments, the channels for a given band may include overlapping and/or non-overlapping channels. For example, a first band may include a first channel and a second channel. To continue this example, the first channel and the second channel may overlap when one or more frequencies are included in both a frequency range for the first channel and a frequency range for the second channel. As another example, the first channel and the second channel may be non-overlapping channels when each channel includes discrete and/or different frequencies. In some embodiments, when channels for a given band include overlapping frequencies, the difference between channels may be based a difference between a starting frequency of a first channel and ending frequency for a second channel that overlaps with the first channel.

As a non-limiting example, a first band may include a first channel and a second channel. In this non-limiting example, the first channel and the second channel may include overlapping frequencies. To continue this non-limiting example, the first channel may include a frequency range of 1 MHz to 10 MHz. The second channel may include a frequency range of 4 MHz to 14 MHz. In this non-limiting example, the first channel and the second channel both include frequencies between 4 MHz and 10 MHz. To continue this non-limiting example, the first channel may be included in a first group of channels and the second channel may be included in a second group of channels.

In some embodiments, a first group of channels may be separated from one another by one or more differences. For example, in a non-limiting example described above, channels 1 and 5 were separated by 20 MHz. In some embodiments, subsequent channels may be separated from one another by one or more differences. For example, in the non-limiting example above, channels 1 and 2 (e.g., subsequent channels) were separated by 5MHz.

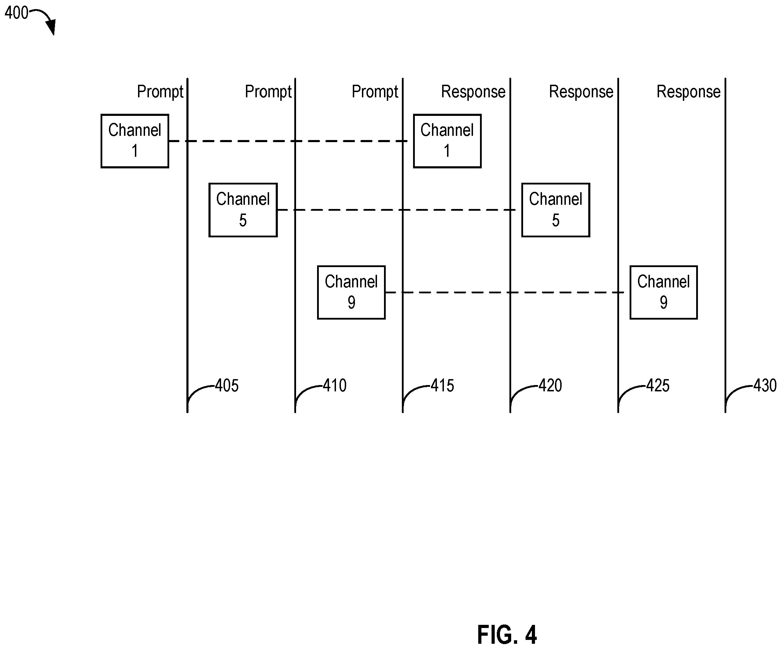

FIG. 4 depicts a flow diagram of a time chart 400 illustrating probe requests and probe responses for one or more grouped channels, according to some embodiments. At least one of the steps of the time chart 400 may be performed by and/or correspond to processes performed by at least one of the various systems, devices, and/or components described herein. For example, the processing circuit 110 may perform at least one of the steps of the time chart 400. As another example, a given step of the time chart 400 may refer to a given point in time where the processing circuit 110 performed one or more processes. While some of the steps of the time chart 400 are described as being performed by a single component, at least one of the steps of the time chart 400 may be performed by one or more components.

In some embodiments, at step 405, a prompt may be transmitted. For example, a probe request may be transmitted on channel 1. In some embodiments, the processing circuit 110 may transmit the probe request. In some embodiments, step 405 may initiate, begin, and/or represent a start to an active scan. The processing circuit 110 may determine, responsive to transmission of the probe request, one or more subsequent channels to transmit probe requests one. For example, the processing circuit 110 may store, in memory 120, the architecture 300 and the processing circuit 110 may reference the architecture 300 to determine subsequent channels.

In some embodiments, at step 410, a second prompt may be transmitted. For example, a probe request may be transmitted on channel 5. In some embodiments, the processing circuit 110 may transmit the second prompt. The processing circuit 110 may transmit the second prompt responsive to transmitting the prompt in step 405.

In some embodiments, at step 415, a third prompt may be transmitted. For example, a probe request may be transmitted on channel 9. In some embodiments, the processing circuit 110 may transmit the third prompt. The processing circuit 110 may transmit the third prompt responsive to transmitting at least one of the prompt in step 405 and/or the second prompt in step 410.

In some embodiments, at step 420, a response may be received. For example, a response to the prompt transmitted in step 405 may be received. In some embodiments, the processing circuit 110 may receive the response to transmission of the prompt. For example, the processing circuit 110 may check for the response to the prompt responsive to the processing circuit 110 transmitting the second prompt and/or the third prompt. In some embodiments, the processing circuit 110 may check for one or more subsequent responses responsive to the processing circuit 110 receiving a response to the prompt on channel 1.

In some embodiments, at step 425, a second response may be received. For example, response to the prompt transmitted in step 410 may be received. In some embodiments, the processing circuit 110 may receive the second response responsive to the processing circuit receiving the response in step 420. In some embodiments, the processing circuit 110 may check for one or more subsequent responses responsive to the processing circuit 110 receiving the second response in step 425.

In some embodiments, at step 430, a third response may be received. For example, a response to the prompt transmitted in step 415 may be received. In some embodiments, the processing circuit 110 may receive the third response responsive to the processing circuit 110 receiving at least one of the response in step 420 and/or the second response in step 425.

In some embodiments, the one or more steps of the time chart 400 may be performed simultaneously and/or in parallel. For example, the device 105 may include a first interface 125, a second interface 125, and a third interface 125. To continue this example, the first interface 125 may transmit the prompt discussed in step 405, the second interface 125 may transmit the prompt discussed in step 410, and the third interface 125 may transmit the probe discussed in step 415. As another example, the interface 125 may include a first receiver, a second receiver, and a third receiver. To continue this example, the processing circuit 110 may listen and/or wait for the response discussed in step 420 via the first receiver, listen and/or wait for the response discussed in step 425 via the second receiver, and listen and/or wait for the response discussed in step 430 via the third receiver.

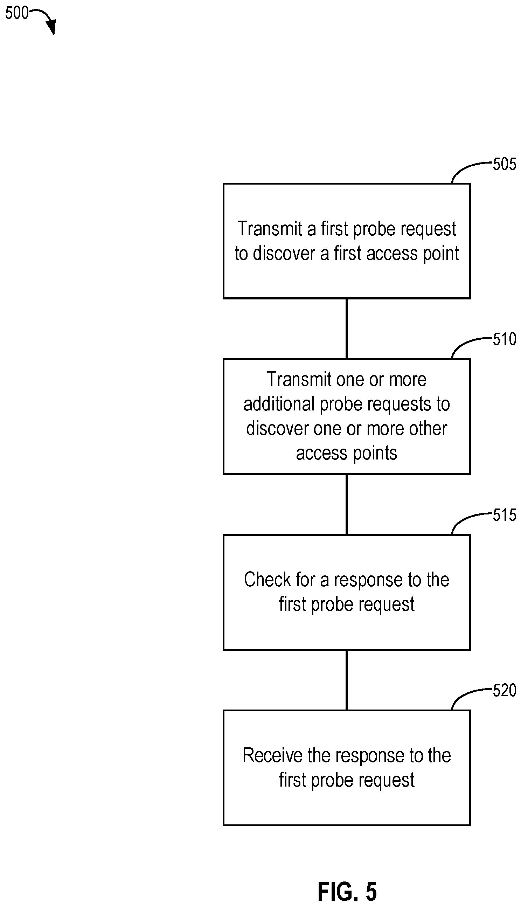

FIG. 5 depicts a block diagram of a process 500 for performing active scans of the one or more channels, according to some embodiments. In some embodiments, the process 500 may include transmitting one or more probe requests on one or more of the channels described herein. The one or more probe requests may be transmitted in parallel and/or in unison (e.g., at the same time and/or at similar time intervals). In some embodiments, the probe requests may be transmitted across one or more channels of a band. For example, the probe requests may be transmitted across the 2.4 GHz band. In some embodiments, at least one step of the process 500 may performed by at least one of the systems, devices, and/or devices described herein. For example, the device 105 may perform at least one step of the process 500. While some steps of the process 500 are described as being performed by the processing circuit 110, at least one of the various systems, devices, and/or components described herein may perform at least one step of the process 500.

In some embodiments, at step 505, a first probe request to discover a first access point may be transmitted. For example, the processing circuit 110 may transmit a probe request to discover an access point 130. In some embodiments, the processing circuit 110 may utilize and/or reference the architecture 300 to determine a given channel. For example, the processing circuit 110 may transmit the first probe request, on channel 1, to discover an access point 130 that is located on channel 1.

In some embodiments, at step 510, one or more additional probe requests to discover one or more other access points may be transmitted. For example, the processing circuit 110 may transmit one or more subsequent probe requests on one or more channels that are different than the channel for which the first probe request was broadcasted on. In some embodiments, the processing circuit 110 may transmit probe requests on one or more channels for a given channel group. For example, the processing circuit 110 may transmit, in step 505, the first probe request on channel 1 and the processing circuit may transmit, in step 510, the one or more additional probe requests on at least one of the channel 5 and/or channel 9. In some embodiments, the processing circuit 110 may transmit the one or more additional probe requests instead of waiting for a response to the first probe request. Stated otherwise, the processing circuit 110 may transmit one or more subsequent probe requests during a dwell time of the first probe request.

In some embodiments, at step 515, a response to the first probe request may be checked. For example, the processing circuit 110 may check for a response to the probe request transmitted in step 505. In some embodiments, the processing circuit 110 may check for the response to the first probe request responsive to the processing circuit 110 transmitting one or more subsequent probe requests. For example, the processing circuit 110 may check for the response to the first probe request responsive to transmission of the additional probe requests in step 510.

In some embodiments, at step 520, the response to the first probe request may be received. For example, the processing circuit 110 may receive the response to the first probe request transmitted in step 505. In some embodiments, the processing circuit 110 may receive the response from a given access point 130. The response may identify one or more access points 130. For example, the response may identify an access point 130 that is included in and/or one channel 1.

The hardware systems described herein may be implemented in many different ways and in many different combinations of hardware and software and circuit designs. For example, all or parts of the implementations may be circuitry that includes an instruction processor, such as a Central Processing Unit (CPU), microcontroller, or a microprocessor; an Application Specific Integrated Circuit (ASIC), Programmable Logic Device (PLO), or Field Programmable Gate Array (FPGA); or circuitry that includes discrete logic or other circuit components, including analog circuit components, digital circuit components or both; or any combination thereof. The circuitry may include discrete interconnected hardware components and/or may be combined on a single integrated circuit die, distributed among multiple integrated circuit dies, or implemented in a Multiple Chip Module (MCM) of multiple integrated circuit dies in a common package, as examples. In some embodiments, the circuitry can be provided on one or more integrated circuit dies in an integrated circuit package. The integrated circuit package can be a combination of two or more packages in some embodiments.

The circuitry may further include or access instructions (e.g., software or firmware) for execution by the circuitry. The instructions may be stored in a tangible storage medium that is other than a transitory signal, such as a flash memory, a Random Access Memory (RAM), a Read Only Memory (ROM), an Erasable Programmable Read Only Memory (EPROM); or on a magnetic or optical disc, such as a Compact Disc Read Only Memory (CDROM), Hard Disk Drive (HOD), or other magnetic or optical disk; or in or on another machine-readable medium. A product, such as a computer program product, may include a storage medium and instructions stored in or on the medium, and the instructions when executed by the circuitry in a device may cause the device to implement any of the processing described above or illustrated in the drawings.

The implementations may be distributed as circuitry among multiple system components, such as among multiple processors and memories, optionally including multiple distributed processing systems. Parameters, databases, and other data structures may be separately stored and managed, may be incorporated into a single memory or database, may be logically and physically organized in many different ways, and may be implemented in many different ways, including as data structures such as linked lists, hash tables, arrays, records, objects, or implicit storage mechanisms. Programs may be parts (e.g., subroutines) of a single program, separate programs, distributed across several memories and processors, or implemented in many different ways, such as in a library, such as a shared library (e.g., a Dynamic Link Library (DLL)). The DLL, for example, may store instructions that perform any of the processing described above or illustrated in the drawings, when executed by the circuitry.

The term "coupled" and variations thereof includes the joining of two members directly or indirectly to one another. The term "electrically coupled" and variations thereof includes the joining of two members directly or indirectly to one another through conductive materials (e.g., metal or copper traces). Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic. The term "electrically decoupled" and variations thereof includes the disjoining (e.g. temporarily or permanently) of two members directly or indirectly to one another in some embodiments. Coupling and decoupling can be performed using a switch (e.g., a transistor).

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities that can operate within a system or environment. It should be understood that the systems described above can provide multiple ones of any or each of those components and these components can be provided on either a standalone machine or, in some embodiments, on multiple machines in a distributed system. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A system (100), comprising:
a circuitry (110), configured to:
transmit a first probe request to discover a first access point (130) of a first channel;
transmit one or more additional probe requests to discover one or more other access points (130) of one or more other channels, instead of waiting for a response to the first probe request;
responsive to transmission of the one or more additional probe requests, check for the response to the first probe request on the first channel; and
receive the response to the first probe request, wherein the response identifies the first access point (130).

2. The system (100) of claim 1, wherein the one or more other channels are selected based at least on a difference between one or more first frequencies of the first channel and one or more second frequencies of the one or more other channels.

3. The system (100) of claim 2, wherein the one or more other channels include a second channel and a third channel, wherein the difference between one or more first frequencies of the first channel and one or more second frequencies of the third channel is different than the difference between the one or more first frequencies of the first channel and one or more second frequencies of the second channel.

4. The system (100) of claim 2 or 3, wherein the circuitry (110) is further configured to establish a connection via a network (135) with the first access point (130) of the first channel.

5. The system (100) of any of claims 1 to 4, wherein the circuity is further configured to:
responsive to receipt of the response to the first probe request, check for one or more responses to the one or more additional probe requests on the one or more other channels; and
receive the one or more responses to the one or more additional probe requests, wherein the one or more responses identify one or more second access points (130).

6. The system (100) of any of claims 1 to 5, wherein the one or more additional probe requests include a second probe request and a third probe request, wherein one or more other access points (130) include a second access point (130) and a third access point (130), and wherein the circuity is further configured to:
transmit the second probe request and the third probe request subsequent to the first probe request and prior to a time period that the circuity is configured to check for the response to the first probe request.

7. The system (100) of any of claims 1 to 6, wherein the circuitry (110) is further configured to:
determine, responsive to connection to a network (135), a first location of a device comprising the circuitry (110); and
transmit, responsive to determination that the device has moved from the first location to a second location, one or more third signals to discover one or more third access points (130).

8. The system (100) of any of claims 1 to 7, wherein the first channel and the one or more other channels correspond to a first band of frequencies, and wherein the circuitry (110) is further configured to transmit one or more third probe requests across a second band of frequencies different than the first band of frequencies to discover one or more third access points (130) on the second band.

9. The system (100) of claim 8, wherein the first band includes a first plurality of frequencies, and wherein the second band includes a second plurality of frequencies different from the first plurality of frequencies.

10. A device (105) comprising:
one or more processors (115) configured to:
transmit a first probe request to discover a first access point (130) of a first channel;
transmit one or more second probe requests to discover one or more second access points (130) of one or more second channels, instead of waiting for a response to the first probe request;
responsive to transmission of the one or more second probe requests, check for the response to the first probe request on the first channel; and
receive the response to the first probe request, wherein the response identifies the first access point (130).

11. The device (105) of claim 10, wherein the one or more second channels are selected based at least on a difference between one or more first frequencies of the first channel and one or more second frequencies of the one or more second channels.

12. The device (105) of claim 11, comprising at least one of the following features:
wherein:
the one or more second channels include a second channel and a third channel;
the difference between the one or more first frequencies of the first channel and the one or more second frequencies of the third channel is different than the difference between the one or more first frequencies of the first channel and the one or more second frequencies of the second channel;
wherein the one or more processors (115) are further configured to transmit the one or more second probe requests prior to checking for the response on the first channel.

13. The device (105) of any of claims 10 to 12, comprising at least one of the following features:
wherein the one or more processors (115) are further configured to:
responsive to receipt of the response to the first probe request, check for one or more second responses to the one or more second probe requests on the one or more second channels; and
receive the one or more second responses to the one or more second probe requests, wherein the one or more second responses identify one or more second access points (130);
wherein the one or more second probe requests include a second probe request and a third probe request, wherein the one or more second access points (130) include a second access point (130) and a third access point (130), and wherein the one or more processors (115) are further configured to:
transmit the second probe request and third probe request subsequent to the first probe request and prior to a time period where the one or more processors (115) are configured to check for the response to the first probe request;
wherein the one or more processors (115) are further configured to:
establish, responsive to receipt of the response, a connection with the first access point (130) to connect the device (105) to a network (135) associated with the first access point (130);
determine, responsive to connection to the network (135), a first location of the device (105); and
transmit, responsive to determination that the device (105) has moved from the first location to a second location, one or more third signals to discover one or more third access points (130);
wherein the first channel and the one or more second channels correspond to a first band of frequencies, and wherein the one or more processors (115) are further configured to transmit one or more third probe requests across a second band of frequencies different than the first band to discover one or more third access points (130) on the second band.

14. A method, comprising:
transmitting, by a circuitry (110), a first probe request to discover a first access point (130) of a first channel;
transmitting, by the circuitry (110), one or more second probe requests to discover one or more second access points (130) of one or more second channels, instead of waiting for a response to the first probe request;
responsive to transmission of the one or more second probe requests, waiting, by the circuitry (110), for the response to the first probe request on the first channel; and
receiving, by the circuitry (110), the response to the first probe request, wherein the response identifies the first access point (130).

15. The method of claim 14, comprising at least one of the following features:
wherein the one or more second channels are selected based at least on a difference between one or more first frequencies of the first channel and one or more second frequencies of the one or more second channels;
further comprising:
responsive to receipt of the response to the first probe request, checking, by the circuitry (110), for one or more second responses to the one or more second probe requests on the one or more second channels; and
receiving, by the circuitry (110), the one or more second responses to the one or more second probe requests, wherein the one or more second responses identify one or more second access points (130).
